# FASCICULE DE BREVET EUROPEEN

(11) **EP 3 611 628 B1**
(45) Date de publication et mention de la délivrance du brevet: **19.01.2022**
(21) Numéro de dépôt: 19188498.0
(22) Date de dépôt: 26.07.2019
(51) Int. Cl.: G06F 15/78

(54) **MICROCONTRÔLEUR**
MICROCONTROLLER
MICROCONTROLLER

(30) Priorité: 10.08.2018 FR 1857433
(43) Date de publication de la demande: 19.02.2020
(73) Titulaire: STMicroelectronics (Grenoble 2) SAS, 38000 Grenoble (FR)
(72) Inventeur: SCOZZOLA, Giovanni, 38120 SAINT EGREVE (FR)
(74) Mandataire: Cabinet Beaumont

(56) Documents cités:
- WO-A1-2013/089736
- US-A1- 2006 211 449

## Description

### Domaine

La présente description concerne le domaine des microcontrôleurs et plus particulièrement les interconnexions des différentes fonctions d'un microcontrôleur.

### Exposé de l'art antérieur

Un microcontrôleur est généralement un circuit intégré qui rassemble les fonctions électroniques essentielles d'un ordinateur par exemple : unité de traitement de données ou processeur, mémoires (mémoire morte et mémoire vive) et interfaces d'entrées-sorties. Les différentes fonctions électroniques d'un microcontrôleur sont généralement connectées les unes aux autres par l'intermédiaire d'un bus.

Les différentes interconnexions à l'intérieur d'un microcontrôleur sont faites de manière filaire. Ainsi, le positionnement des différentes fonctions est limité par ces interconnexions.

De plus, le nombre de fonctions est limité aux fonctions intégrées lors de la fabrication du microcontrôleur. Le document WO2013/089736 décrit un microcontrôleur comprenant des fonctions électroniques et un circuit d'interconnexion adapté à transmettre, sans fil, des données entre les fonctions électroniques. Les données de configuration du circuit d'interconnexion ne sont pas adaptables.

### Résumé

Un mode de réalisation pallie tout ou partie des inconvénients des microcontrôleurs usuels.

Un mode de réalisation prévoit un microcontrôleur comprenant des fonctions électroniques distinctes et un circuit d'interconnexion adapté à transmettre, sans fil, des données entre lesdites fonctions. Le circuit d'interconnexion comprend une unité de traitement de données, un routeur, une mémoire, et un circuit d'émission/réception de données. Un mode d'utilisation comprend les étapes suivantes :
a. déterminer les fonctions électroniques présentes;
b. si des fonctions électroniques dont les caractéristiques de configuration ne sont pas contenues dans la mémoire sont présentes, écrire leurs caractéristiques de configuration dans la mémoire du circuit d'interconnexion; et
c. si des fonctions électroniques dont les caractéristiques de configuration sont contenues dans la mémoire sont absentes, effacer leurs caractéristiques de configuration de la mémoire du circuit d'interconnexion.

Selon un mode de réalisation, au moins une fonction comprend une unité de traitement de données et au moins une fonction comprend une mémoire.

Selon un mode de réalisation, les différentes fonctions électroniques ne sont pas connectées entre elles par une connexion filaire.

Selon un mode de réalisation, une fonction électronique comprend une interface d'entrée/sortie.

Selon un mode de réalisation, l'interface d'entrée/sortie comprend des connexions filaires avec des périphériques.

Selon un mode de réalisation, le circuit d'interconnexion est un routeur wifi.

Selon un mode de réalisation, les étapes a, b et c sont effectuées périodiquement au cours du fonctionnement du microcontrôleur.

Selon un mode de réalisation, la période est comprise entre environ 1 ms et environ 10 s.

Selon un mode de réalisation, le mode d'utilisation comprend les étapes suivantes :
d. déterminer un programme à exécuter ;
e. déterminer les fonctions électroniques utilisées par ce programme ;
f. déterminer si ces fonctions électroniques sont disponibles ;
g. rendre inaccessibles ces fonctions électroniques à d'autres programmes ;
h. établir une connexion sans fil entre les fonctions électroniques ; et
i. exécuter le programme.

Selon un mode de réalisation, chaque fonction électronique comprend un circuit d'émission/réception de données.

Selon un mode de réalisation, le circuit d'interconnexion est adapté à détecter l'ajout et/ou le retrait de fonctions électroniques dans le microcontrôleur.

Selon un mode de réalisation, le circuit d'interconnexion et au moins certaines des fonctions électroniques sont alimentées sans fil.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement un mode de réalisation d'un microcontrôleur ;
la figure 2 illustre plus en détail une partie du microcontrôleur de la figure 1 ; et
la figure 3 illustre un mode d'utilisation du microcontrôleur de la figure 1.

### Description détaillée

De mêmes éléments ont été désignés par de mêmes références dans les différentes figures. Par souci de clarté, seuls les éléments utiles à la compréhension des modes de réalisation décrits ont été représentés et sont détaillés.

Sauf précision contraire, les expressions "approximativement", "environ", "sensiblement", et "de l'ordre de" signifient à 10 % près, de préférence à 5 % près.

Sauf précision contraire, lorsque l'on fait référence à deux éléments connectés entre eux, cela signifie que ces éléments sont directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

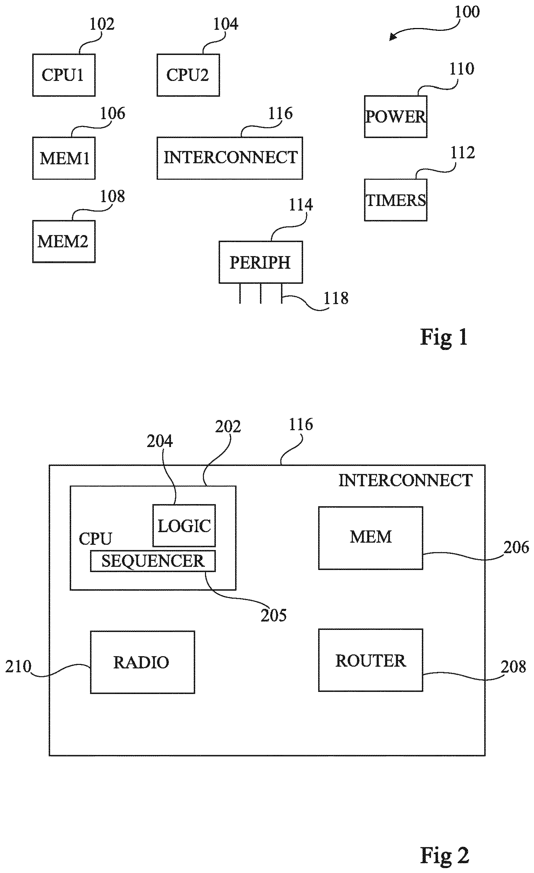

La figure 1 illustre schématiquement un mode de réalisation d'un microcontrôleur 100.

Le microcontrôleur 100 comprend, dans cet exemple, sept fonctions électroniques distinctes et un circuit d'interconnexion 116 (INTERCONNECT). Plus précisément, ces fonctions comprennent ici deux unités de traitement de données ("Central Processing Unit") 102 (CPU1) et 104 (CPU2), deux mémoires 106 (MEM1) et 108 (MEM2), un circuit d'alimentation 110 (POWER), des horloges 112 (TIMERS), une interface d'entrée/sortie 114 (PERIPH).

En pratique, le microcontrôleur 100 peut comprendre un nombre quelconque de fonctions électroniques, mais au moins une unité de traitement de données et au moins une mémoire.

Le circuit d'interconnexion 116 est adapté à transmettre, sans fil, des données entre différentes fonctions électroniques du microcontrôleur 100. Par données, on entend tous signaux requis, qu'il s'agisse d'adresses, de données proprement dites ou de commandes. Chaque fonction électronique du microcontrôleur comprend donc un circuit adapté à recevoir et à émettre des données. Ces circuits d'émission/réception permettent d'établir une connexion sans fil entre les différentes fonctions, par l'intermédiaire du circuit d'interconnexion, et sont par exemple compatibles les uns avec les autres.

Le circuit d'alimentation 110 est par exemple un circuit d'alimentation sans fil. Les différentes fonctions électroniques pouvant faire partie du microcontrôleur sont alors adaptées à être alimentées par un tel circuit d'alimentation 110.

Les mémoires 106 et 108 sont par exemple des mémoires volatiles ou non-volatiles.

L'interface d'entrée/sortie 114 est un circuit formant une interface entre des périphériques, non représentés, et le microcontrôleur 100. Les périphériques sont par exemple reliés à l'interface 114 par des connexions filaires 118. Des données peuvent donc être transmises entre les périphériques et le microcontrôleur 100 par l'intermédiaire d'une connexion filaire, entre les périphériques et l'interface 114, et par l'intermédiaire d'une connexion sans fil, entre l'interface 114 et les fonctions internes au microcontrôleur 100.

Des fonctions électroniques, adaptées à fonctionner avec le circuit d'interconnexion 116, peuvent être ajoutées ou retirées du microcontrôleur à tout moment et en nombre quelconque. Pour ce faire, ces fonctions sont placées à portée du circuit d'interconnexion 116.

Le circuit 116 est par exemple un routeur wifi.

Un autre exemple de circuit d'interconnexion 116 est décrit en relation avec la figure 2.

La figure 2 illustre plus en détail une partie du microcontrôleur de la figure 1.

Le circuit 116 (INTERCONNECT) comprend :
- une unité de traitement de données 202 (CPU) comprenant par exemple des circuits logiques 204 (LOGIC) et un séquenceur 205 (SEQUENCER) ;
- une mémoire 206 (MEM) ;
- un routeur 208 (ROUTER) ; et
- un circuit 210 d'émission/réception radiofréquence (RADIO).

Le circuit 116 comprend, en outre, un circuit d'alimentation, non représenté, par exemple adapté à être alimenté par le circuit 110 d'alimentation sans fil (illustré en figure 1).

Le routeur 208 et le circuit 210 d'émission/réception permettent la transmission de données entre les différentes fonctions du microcontrôleur 100.

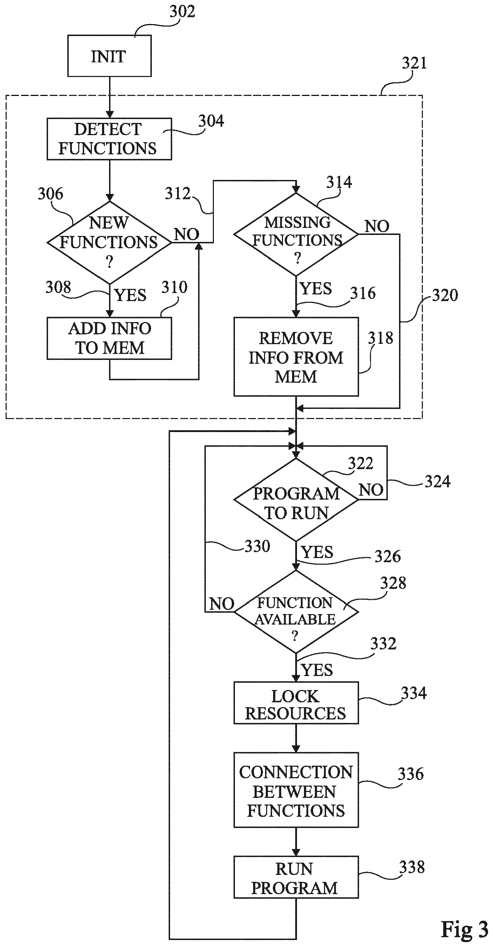

La figure 3 illustre un mode d'utilisation du microcontrôleur de la figure 1 comprenant un circuit d'interconnexion 116 tel que décrit en relation avec la figure 2.

Au cours d'une première étape 302 (INIT), le microcontrôleur 100 est initialisé. Les différentes fonctions électroniques présentes sont activées. En particulier, le circuit 110 d'alimentation est mis en fonctionnement, ce qui permet d'alimenter les autres fonctions. De plus, les fonctions électroniques et le circuit d'interconnexion 116 sont initialisés de manière à être prêts à fonctionner.

Au cours d'une étape 304 (DETECT FUNCTIONS) postérieure à l'étape 302, le circuit d'interconnexion 116 détecte les fonctions électroniques présentes, c'est-à-dire disponibles pour le microcontrôleur 100. Le circuit 116 détecte par exemple les fonctions électroniques situées à portée du circuit 116.

Le circuit 116 détermine ensuite, à une étape 306 (NEW FUNCTIONS ?), si des fonctions électroniques qu'il n'avait pas détectées précédemment, c'est-à-dire des fonctions dont les caractéristiques de configuration ne sont pas contenues en mémoire 206, sont présentes. Si c'est le cas, (branche 308, YES), le circuit 116 enregistre, dans la mémoire 206, les caractéristiques de configuration de chaque nouvelle fonction. Cela correspond à une étape 310 (ADD INFO TO MEM). Par caractéristiques de configuration, on désigne les caractéristiques permettant par exemple de transmettre les données, de déterminer les fonctions entre lesquelles doivent être transmises des données, et de déterminer si les fonctions présentes sont suffisantes pour exécuter un programme donné.

Par exemple, dans le cas où la fonction est une mémoire, le circuit 116 enregistre par exemple le type de mémoire (ROM, RAM, Flash etc.), la taille de la mémoire, certaines adresses spécifiques, la vitesse de la mémoire, etc. Dans le cas d'une mémoire comprenant des programmes, par exemple une mémoire non volatile, le circuit 116 enregistre le nombre de programmes contenus dans la mémoire et les ressources, c'est-à-dire les types et nombre de fonctions électroniques, utilisées pour l'exécution du programme.

Après l'étape 310, ainsi que dans le cas où le circuit 116 ne détecte pas de fonctions électroniques qu'il n'avait pas détecté précédemment (branche 312, NO), le circuit 116 détermine si certaines fonctions dont les caractéristiques de configuration sont contenues dans la mémoire 206 sont absentes ou inaccessibles (étape 314, MISSING FUNCTIONS ?) . Si c'est le cas, c'est-à-dire si certaines de ces fonctions ne sont plus présentes (branche 316, YES), le circuit 116 efface les caractéristiques correspondant à ces fonctions de la mémoire 206 (étape 318, REMOVE INFO FROM MEM) .

Après l'étape 318, ainsi que dans le cas où le circuit 116 détermine que toutes les fonctions dont les caractéristiques de configuration sont contenues dans la mémoire 206 sont présentes et accessibles (branche 320, NO), le circuit 116 passe à l'étape suivante (étape 322).

A titre de variante, les étapes 314 et 318 peuvent être effectuées avant les étapes 306 et 310 ou peuvent être effectuées simultanément.

Les étapes 304 à 318 forment un ensemble d'étapes 321. L'ensemble 321 peut être répété au cours du fonctionnement du microcontrôleur 100. Par exemple, l'ensemble 321 est répété périodiquement, par exemple avec une période comprise entre environ 1 ms et environ 10 s, par exemple comprise entre environ 7,5 ms et environ 4 s. L'ensemble 321 est par exemple effectué avant chaque étape 322.

Par la suite, le circuit 116 détermine si des programmes cherchent à être exécutés (étape 322, PROGRAM TO RUN?), par exemple sur instruction d'une unité de traitement de données. Par programme, on désigne toute activité du microcontrôleur 100 dans laquelle des données sont transmises entre différentes fonctions du microcontrôleur. Le circuit 116 peut par exemple permettre l'exécution de plusieurs programmes simultanément.

Si aucun programme n'est à exécuter (branche 324, NO), le circuit d'interconnexion 116 est en attente. Si au moins un programme est à exécuter (branche 326, YES), le circuit 116 détermine, par exemple par l'intermédiaire des circuits logiques 204, si les fonctions utilisées par ce programme sont présentes et disponibles (étape 328, FUNCTIONS AVAILABLE ?). Par exemple, si le programme consiste en l'écriture ou la lecture de données dans une mémoire, les fonctions utilisées sont par exemple une unité de traitement de données et une mémoire.

Si au moins une de ces fonctions n'est pas présente ou n'est pas disponible (branche 330, NO), le circuit 116 passe à un autre programme et revient à l'étape 322. Si toutes les fonctions utilisées par le programme sont présentes et disponibles (branche 332, YES), ces fonctions sont bloquées (étape 334, LOCK RESOURCES), par exemple par les circuits logiques 204, c'est-à-dire qu'elles ne sont plus disponibles pour d'autres programmes pouvant chercher à les utiliser. A titre de variante, certaines fonctions peuvent être adaptées à exécuter plus d'un programme à la fois. Ces fonctions sont alors considérées indisponibles lorsqu'elles exécutent simultanément le nombre maximal de programmes.

Une fois cette étape effectuée, une connexion sans fil est établie, par l'intermédiaire du circuit d'émission/réception 210 et du routeur 208, entre les fonctions utilisées par le programme (étape 336, CONNECTION BETWEEN FUNCTIONS) et le programme est lancé (étape 338, RUN PROGRAM), par l'intermédiaire des circuits logiques 204. Après le lancement du programme, le circuit 116 détermine si un autre programme doit être exécuté (étape 322).

Si une fonction est retirée, par exemple n'est plus à portée du circuit 116 ou est éteinte, les programmes utilisant cette fonction sont soit redirigés vers une autre fonction similaire, soit mis en attente, soit arrêtés. Les caractéristiques de configuration des programmes peuvent par exemple comprendre des instructions pour un tel cas.

Un avantage des modes de réalisation décrits est qu'il est possible de former un microcontrôleur dont le nombre de fonctions n'est pas limité par l'espace disponible et le nombre de connexions filaires. Il est donc possible d'ajouter, au besoin, des fonctions, par exemple des mémoires, des unités de traitement de données etc.

Un autre avantage des modes de réalisation décrits est que les composants peuvent être physiquement éloignés les uns des autres.

Un autre avantage des modes de réalisation décrits est qu'il n'est plus nécessaire de prévoir de connexions filaires internes au microcontrôleur, ce qui entraine une diminution du coût de fabrication.

Divers modes de réalisation avec diverses variantes ont été décrits ci-dessus. D'autres variantes apparaitront à l'homme de l'art. On notera que l'homme de l'art pourra combiner divers éléments de ces divers modes de réalisation et variantes.

## Revendications

1. Microcontrôleur (100) comprenant des fonctions électroniques (102, 104, 106, 108, 110, 112, 114) distinctes et un circuit d'interconnexion (116) adapté à transmettre, sans fil, des données entre lesdites fonctions, le circuit d'interconnexion comprenant une unité de traitement de données (202), un routeur (208), une mémoire (206), et un circuit d'émission/réception de données (210), dans lequel un mode d'utilisation comprend les étapes suivantes :
a. déterminer les fonctions électroniques présentes (304) ;
b. si des fonctions électroniques dont les caractéristiques de configuration ne sont pas contenues dans la mémoire sont présentes (306), écrire leurs caractéristiques de configuration dans la mémoire du circuit d'interconnexion (308) ; et
c. si des fonctions électroniques dont les caractéristiques de configuration sont contenues dans la mémoire sont absentes (314), effacer leurs caractéristiques de configuration de la mémoire du circuit d'interconnexion (318).

2. Microcontrôleur selon la revendication 1, dans lequel au moins une fonction comprend une unité de traitement de données (102, 106) et au moins une fonction comprend une mémoire (106, 108).

3. Microcontrôleur selon la revendication 1 ou 2, dans lequel les différentes fonctions électroniques ne sont pas connectées entre elles par une connexion filaire.

4. Microcontrôleur selon l'une quelconque des revendications 1 à 3, dans lequel une fonction électronique comprend une interface d'entrée/sortie (114).

5. Microcontrôleur selon la revendication 4, dans lequel l'interface d'entrée/sortie (114) comprend des connexions filaires (118) avec des périphériques.

6. Microcontrôleur selon l'une quelconque des revendications 1 à 5, dans lequel le circuit d'interconnexion est un routeur wifi.

7. Microcontrôleur selon l'une quelconque des revendications 1 à 6, dans lequel les étapes a, b et c sont effectuées périodiquement au cours du fonctionnement du microcontrôleur.

8. Microcontrôleur selon la revendication 7, dans lequel la période est comprise entre environ 1 ms et environ 10 s.

9. Microcontrôleur selon l'une quelconque des revendications 1 à 8, dans lequel le mode d'utilisation comprend les étapes suivantes :
d. déterminer un programme à exécuter (322) ;
e. déterminer les fonctions électroniques utilisées par ce programme (328) ;
f. déterminer si ces fonctions électroniques sont disponibles (328) ;
g. rendre inaccessibles ces fonctions électroniques à d'autres programmes (334) ;
h. établir une connexion sans fil entre les fonctions électroniques (336) ; et
i. exécuter le programme (338).

10. Microcontrôleur selon l'une quelconque des revendications 1 à 9, dans lequel chaque fonction électronique comprend un circuit d'émission/réception de données.

11. Microcontrôleur selon l'une quelconque des revendications 1 à 10, dans lequel le circuit d'interconnexion (116) est adapté à détecter l'ajout et/ou le retrait de fonctions électroniques dans le microcontrôleur (100).

12. Microcontrôleur selon l'une quelconque des revendications 1 à 11, dans lequel le circuit d'interconnexion et au moins certaines des fonctions électroniques sont alimentées sans fil.

## Patentansprüche

1. Mikrocontroller (100), der verschiedene elektronische Funktionen (102, 104, 106, 108, 110, 112, 114) und eine Verbindungsschaltung (116) aufweist, die in der Lage ist, auf drahtlose Weise Daten zwischen den Funktionen zu übertragen, wobei die Verbindungsschaltung eine Datenverarbeitungseinheit (202), einen Router (208), einen Speicher (206) und eine Daten-Sende-/-Empfangsschaltung (210) aufweist, wobei ein Verwendungsmodus die folgenden Schritte aufweist:
a. Bestimmen der vorhandenen elektronischen Funktionen (304);
b. wenn elektronische Funktionen, deren Konfigurationsmerkmale nicht in dem Speicher enthalten sind, vorhanden sind (306), Schreiben ihrer Konfigurationsmerkmale in den Speicher der Verbindungsschaltung (308); und
c. wenn elektronische Funktionen, deren Konfigurationsmerkmale im Speicher enthalten sind, nicht vorhanden sind (314), Löschen ihrer Konfigurationsmerkmale aus dem Speicher der Verbindungsschaltung (318).

2. Mikrocontroller nach Anspruch 1, wobei mindestens eine Funktion eine Datenverarbeitungseinheit (102, 106) und mindestens eine Funktion einen Speicher (106, 108) aufweist.

3. Mikrocontroller nach Anspruch 1 oder 2, wobei die verschiedenen elektronischen Funktionen nicht durch eine Drahtverbindung miteinander verbunden sind.

4. Mikrocontroller nach einem der Ansprüche 1 bis 3, wobei eine elektronische Funktion eine Eingabe/Ausgabe-Schnittstelle (114) aufweist.

5. Mikrocontroller nach Anspruch 4, wobei die Eingangs-/Ausgangsschnittstelle (114) Drahtverbindungen (118) mit Peripheriegeräten aufweist.

6. Mikrocontroller nach einem der Ansprüche 1 bis 5, wobei die Verbindungsschaltung ein WLAN-Router ist.

7. Mikrocontroller nach einem der Ansprüche 1 bis 6, wobei die Schritte a, b und c während des Betriebs des Mikrocontrollers periodisch ausgeführt werden.

8. Mikrocontroller nach Anspruch 7, wobei die Periode im Bereich von etwa 1 ms bis etwa 10 s liegt.

9. Mikrocontroller nach einem der Ansprüche 1 bis 8, wobei der Verwendungsmodus die folgenden Schritte aufweist::
d. Bestimmen eines auszuführenden Programms (322);
e. Bestimmen der elektronischen Funktionen, die von dem Programm verwendet werden (328);
f. Bestimmen, ob diese elektronischen Funktionen verfügbar sind (328);
g. Unzugänglichmachen dieser elektronischen Funktionen für andere Programme (334);
h. Herstellen einer drahtlosen Verbindung zwischen den elektronischen Funktionen (336); und
i. Ausführen des Programms (338).

10. Mikrocontroller nach einem der Ansprüche 1 bis 9, wobei jede elektronische Funktion eine Daten-Sende/Empfangsschaltung aufweist.

11. Mikrocontroller nach einem der Ansprüche 1 bis 10, wobei die Verbindungsschaltung (116) in der Lage ist, das Hinzufügen und/oder Entfernen von elektronischen Funktionen in dem Mikrocontroller (100) zu erkennen.

12. Mikrocontroller nach einem der Ansprüche 1 bis 11, wobei die Verbindungsschaltung und mindestens einige der elektronischen Funktionen drahtlos mit Strom versorgt werden.

## Claims

1. A microcontroller (100) comprising distinct electronic functions (102, 104, 106, 108, 110, 112, 114) and an interconnection circuit (116) capable of transmitting, in wireless fashion, data between said functions, the interconnection circuit comprising a central processing unit (202), a router (208), a memory (206), and a data transmit/receive circuit (210), wherein a usage mode comprises the steps of:
a. determining the electronic functions which are present (304) ;
b. if electronic functions which do not have their configuration characteristics contained in the memory are present (306), writing their configuration characteristics into the memory of the interconnection circuit (308); and
c. if electronic functions having their configuration characteristics contained in the memory are absent (314), erasing their configuration characteristics from the memory of the interconnection circuit (318).

2. The microcontroller of claim 1, wherein at least one function comprises a central processing unit (102, 106) and at least one function comprises a memory (106, 108).

3. The microcontroller of claim 1 or 2, wherein the different electronic functions are not interconnected by a wire connection.

4. The microcontroller of any of claims 1 to 3, wherein an electronic function comprises an input/output interface (114).

5. The microcontroller of claim 4, wherein the input/output interface (114) comprises wire connections (118) with peripherals.

6. The microcontroller of any of claims 1 to 5, wherein the interconnection circuit is a Wi-Fi router.

7. The microcontroller of any of claims 1 to 6, wherein steps a, b, and c are periodically carried out during the operation of the microcontroller.

8. The microcontroller of claim 7, wherein the period is in the range from approximately 1 ms to approximately 10 s.

9. The microcontroller of any of claims 1 to 8, wherein the usage mode comprises the steps of:
d. determining a program to be executed (322);
e. determining the electronic functions used by the program (328) ;
f. determining whether these electronic functions are available (328);
g. making these electronic functions inaccessible to other programs (334);
h. establishing a wireless connection between the electronic functions (336); and
i. executing the program (338).

10. The microcontroller of any of claims 1 to 9, wherein each electronic function comprises a data transmit/receive circuit.

11. The microcontroller of any of claims 1 to 10, wherein the interconnection circuit (116) is capable of detecting the addition and/or the removal of electronic functions to and/or from the microcontroller (100).

12. The microcontroller of any of claims 1 to 11, wherein the interconnection circuit and at least some of the electronic functions are powered in wireless fashion.
